# EUROPÄISCHE PATENTSCHRIFT

(11) **EP 4 213 294 B1**
(45) Veröffentlichungstag und Bekanntmachung des Hinweises auf die Patenterteilung: **06.08.2025**
(21) Anmeldenummer: 22208504.5
(22) Anmeldetag: 21.11.2022
(51) Int. Cl.: H01M 50/517, F16B 21/08

(54) **TRAGELEMENT FÜR EINEN BAUTEIL-TRANSFER**
SUPPORTING ELEMENT FOR TRANSFER OF COMPONENTS
ÉLÉMENT SUPPORT POUR UN TRANSFERT DE COMPOSANTS

(30) Priorität: 12.01.2022 DE 102022100641
(43) Veröffentlichungstag der Anmeldung: 19.07.2023
(73) Patentinhaber: AUDI AG, 85057 Ingolstadt (DE)
(72) Erfinder: Reile, Daniel, 91795 Dollnstein (DE)

(56) Entgegenhaltungen:
- DE-A1- 102019 212 797
- FR-A1- 2 917 349
- FR-A5- 2 165 073
- US-A1- 2009 226 249
- US-B2- 10 711 821
- US-B2- 11 139 531

## Beschreibung

Die Erfindung betrifft ein Tragelement für den Transfer eines Bauteils nach dem Obergriff des Anspruches 1 sowie einen Spreizstift gemäß Anspruch 10.

In einem Hochvoltbatteriesystem eines elektrisch betriebenen Fahrzeugs sind die Modulterminals benachbarter Batteriemodule des Hochvoltbatteriesystems über Modulverbinder (Bus-Bars) elektrisch miteinander verschaltet. Die Montage der Modulverbinder kann in einer Serienproduktion robotergestützt erfolgen.

In einem gattungsgemäßen Montageprozess wird zunächst eine als Stahlrahmen ausgeführte Schablone von einem Werker mit den Modulverbindern bestückt. Beim Bestückungsvorgang wird jeder der Modulverbinder in lösbare Rast- und/oder Klemmverbindung mit einem an der Schablone ausgebildeten Spreizstift gebracht. Nach erfolgter Bestückung wird die Schablone robotergestützt in eine Montageposition transferiert. In der Montageposition überdeckt die Schablone die Oberseite der im Batteriegehäuse positionierten Batteriemodule. Zudem wird in der Montageposition jeder der Modulverbinder mit Hilfe eines hubverstellbar an der Schablone gelagerten Stößels außer Rast- oder Klemmeingriff mit dem jeweiligen Spreizstift der Schablone gebracht und lagerichtig auf den Schraubstellen der Modulterminals abgelegt. Anschließend folgt ein Schraubprozess, bei dem der Modulverbinder mit den Modulterminals der benachbarten Batteriemodule verspannt wird.

Beim Bestückungsvorgang, Transfervorgang und Montagevorgang sind die Spreizstifte der Schablone hohen mechanischen Belastungen ausgesetzt, die zu einem frühzeitigen Verschleiß führen können, so dass eine funktionssichere Rast- oder Klemmverbindung der Schablone mit den Modulverbindern nicht mehr gewährleistet ist. Im Hinblick auf eine Funktionssicherheit der Schablone müssen daher die Spreizstifte regelmäßig ausgetauscht werden, was montagetechnisch aufwändig sowie kostspielig ist.

Aus der DE 2007 027 831 A1 ist ein Dübel für eine Deckplatteneinspreizung bekannt. Aus der DE 103 58 905 A1 ist ein Dehnungsbolzen bekannt. Aus der GB 1 059 134 A ist ein weiteres Spreizelement bekannt. Aus der US 10 711 821 B2 ist ein weiteres Befestigungselement bekannt.

Die Aufgabe der Erfindung besteht darin, ein Tragelement für den Transfer eines Bauteils, insbesondere eines Modulverbinders, bereitzustellen, bei dem im Vergleich zum Stand der Technik in einfacher Weise eine Funktionssicherheit gewährleistet ist.

Die Aufgabe ist durch die Merkmale des Patentanspruches 1 oder des Patentanspruches 10 gelöst. Bevorzugte Weiterentwicklungen der Erfindung sind in den Unteransprüchen offenbart.

Die Erfindung geht von einem Tragelement für den Transfer eines Bauteils von einer Bestückungsposition in eine Montageposition aus. In der Bestückungsposition wird das Tragelement mit dem Bauteil bestückt. In der Montageposition kann das Bauteil vom Tragelement gelöst werden und an einer Fügestelle montiert werden. Das Tragelement weist zumindest einen Spreizstift auf. Dieser ist nach erfolgter Bauteil-Bestückung in lösbarem Rast- oder Klemmeingriff mit einer Bauteil-Gegenkontur. Im Rast- oder Klemmeingriff baut der Spreizstift eine radial nach außen wirkende Rast- oder Klemmkraft auf, um eine sichere Halterung der Bauteils zu erzielen. Demgegenüber ist der Spreizstift des Tragelements in der Montageposition außer Rast- oder Klemmeingriff mit der Bauteil-Gegenkontur bringbar. Gemäß dem kennzeichnenden Teil des Anspruches 1 ist dem Spreizstift eine Einstelleinheit zugeordnet. Mit Hilfe der Einstelleinheit ist die radial nach außen wirkende Rast- oder Klemmkraft des Spreizstifts einstellbar. Auf diese Weise kann durch Betätigung der Einstelleinheit die Rast- oder Klemmkraft, mit der der Spreizstift in Rast- oder Klemmeingriff mit der Bauteil-Gegenkontur ist, nachgestellt werden, sobald sich die vom Spreizstift bereitgestellte Rast- oder Klemmkraft aufgrund mechanischer Belastungen im Laufe der Betriebsdauer reduziert.

In einer technischen Umsetzung kann der Spreizstift einen Stiftschaft mit zumindest einem radial verstellbaren Schaftsegment aufweisen. Das Schaftsegment kann mittels der Einstelleinheit in Radialrichtung ein- oder ausgesteuert werden, um die Rast- oder Klemmkraft anzupassen.

Im Hinblick auf eine kompakte sowie materialsparende Bauteilgeometrie kann der Spreizstift als ein Hohlstift ausgebildet sein. Der Hohlstift weist einen hülsenförmigen Stiftschaft auf, in dem in Umfangsrichtung verteilte Längsschlitze ausgebildet sein können. Diese können bevorzugt an der Schaftspitze axial offen gestaltet sein. Die Längsschlitze können in Umfangsrichtung betrachtet jeweils die Schaftsegmente begrenzen. Für eine kompakte Ausführung ist es bevorzugt, wenn die Einstelleinheit im Innenraum des als Hohlstift ausgebildeten Spreizstiftes angeordnet ist.

Eine einfache Einstellbarkeit der vom Spreizstift auf die Bauteil-Gegenkontur ausgeübten Rast- oder Klemmkraft ist von besonderer Bedeutung. Vor diesem Hintergrund kann die Einstelleinheit als eine Einstellschraube realisiert sein, die in einem Innengewinde des Hohlstifts in Schraubeingriff ist. Bei Schraubbetätigung der Einstellschraube kann die Rast- oder Klemmkraft des Spreizstifts eingestellt werden. Dabei kann die Einstellschraube mittelbar oder unmittelbar auf das Schaftsegment einwirken.

Für eine einfache Bewegungsübertragung der Schraubbewegung zu einer Spreizbewegung der Schaftsegmente ist es bevorzugt, wenn die Einstelleinheit neben der Einstellschraube zusätzlich ein Spreizelement, insbesondere eine Spreizkugel, aufweist. Das Spreizelement kann kraftübertragend zwischen der Einstellschraube und dem Schaftsegment angeordnet sein und eine Bewegungsübertragung bewirken, bei der die in Axialrichtung geführte Schraubbewegung in eine in Radialrichtung ausgerichtete Spreizbewegung umgewandelt wird.

Um eine betriebssichere Bewegungsumwandlung zu gewährleisten, ist es bevorzugt, wenn der hülsenförmige Stiftschaft des Spreizstiftes insbesondere im Bereich des Schaftsegmente eine innenliegende Ringschulter aufweist, auf der das Spreizelement abstützbar ist. Die Ringschulter bildet einen Lagersitz für das Spreizelement, wodurch die Bewegungsübertragung der Einstellschraube auf die Schaltsegmente erfolgt.

Bevorzugt ist es, wenn die Einstellschraube nicht unmittelbar in kraftübertragender Verbindung mit dem Spreizelement (das heißt mit der Spreizkugel) ist, sondern vielmehr mittelbar, das heißt unter Zwischenlage einer Feder, gegen das Spreizelement drückt. Auf diese Weise ist gewährleistet, dass bei einer mechanischen Belastung die Schaltsegmente unter Aufbau einer Feder-Rückstellkraft elastisch nachgiebig verlagerbar sind. Im Gegensatz dazu würden ohne der zwischengeordneten Feder die Schaftsegmente auf Block gegen das Einstellelement in Anlage sein.

In einer konkreten Ausführungsform wird das Tragelement als eine Schablone bei einem automatisierten Zusammenbau eines Hochvoltbatteriesystems eines elektrisch betriebenen Fahrzeugs eingesetzt. In diesem Fall ist das Bauteil ein Modulverbinder, der Modulterminals benachbarter Batteriemodule des Hochvoltbatteriesystems miteinander elektrisch verschaltet.

In der Bestückungsposition wird der Modulverbinder vom Werker in lösbaren Rast- und/oder Klemmeingriff mit dem Spreizstift der Schablone gebracht. Anschließend wird die Schablone mit dem darauf bestückten Modulverbinder in die Montageposition transferiert. In der Montageposition wird der Modulverbinder mittels eines hubverstellbar an der Schablone ausgebildeten Stö-ßels außer Rast- oder Klemmeingriff mit dem Spreizstift der Schablone gebracht und lagerichtig auf den Schraubstellen der Modulterminals abgelegt. Danach startet ein Schraubprozess, bei dem der Modulverbinder mit den Modulterminals der benachbarten Batteriemodule verspannbar ist.

Nachfolgend ist ein Ausführungsbeispiel der Erfindung anhand der beigefügten Figuren beschrieben.

Es zeigen:
- Fig. 1: einen an Modulterminals benachbarter Batteriemodule verschraubten Modulverbinder;
- Fig. 2 bis 4: jeweils Ansichten, anhand derer eine Prozessabfolge zur Montage des Modulverbinders an den Batteriemodulen veranschaulicht ist; und
- Fig. 5: einen an der Schablone befestigten Spreizstift in vergrößerter Darstellung.

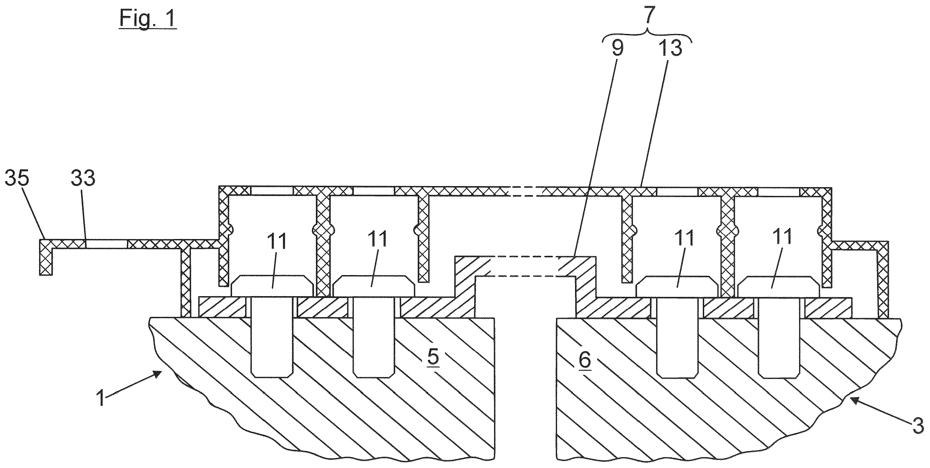

In der Fig. 1 sind zwei benachbarte Batteriemodule 1, 3 gezeigt, deren Modulterminals 5, 6 mit einem Modulverbinder 7 elektrisch miteinander verbunden sind. Die Batteriemodule 1, 3 sind Bestandteile eines Hochvoltbatteriesystems eines elektrisch betriebenen Fahrzeugs. Das Hochvoltbatteriesystem kann neben den beiden gezeigten Modulterminals 5, 6 eine Vielzahl weiterer Batteriemodule aufweisen, die ebenfalls mittels Modulverbinder 7 miteinander elektrisch verschaltet sind.

In der Fig. 1 weist der Modulverbinder 7 eine stromführende Metallschiene 9 auf, die mittels jeweils zweier Befestigungsschrauben 11 am jeweiligen Modulterminal 5, 6 elektrisch leitfähig verschraubt sind. Die Metallschiene 9 ist in einem Kunststoffgehäuse 13 des Modulverbinders 7 angeordnet.

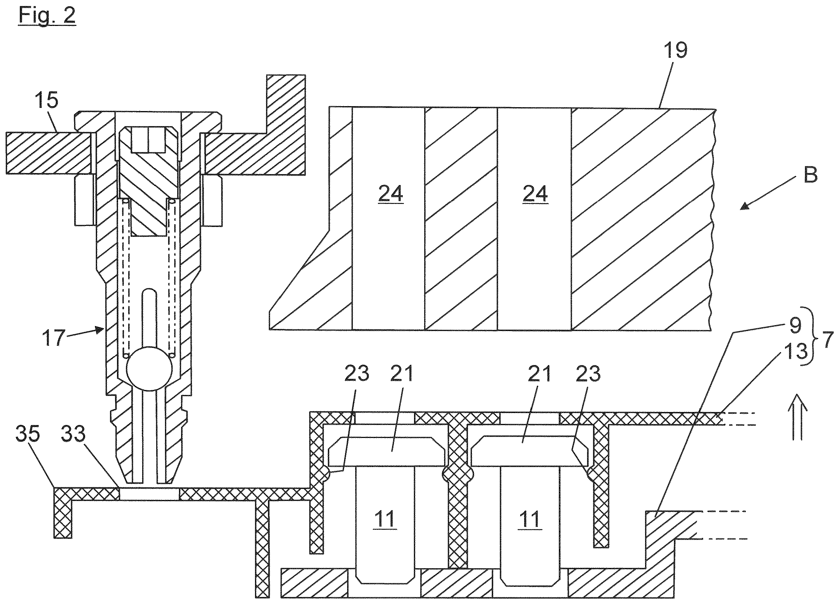

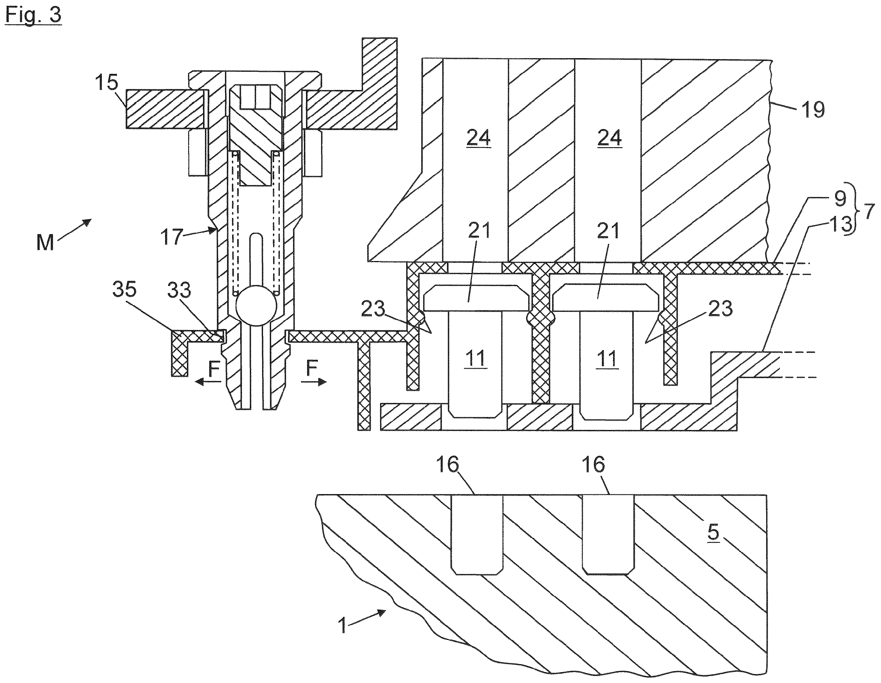

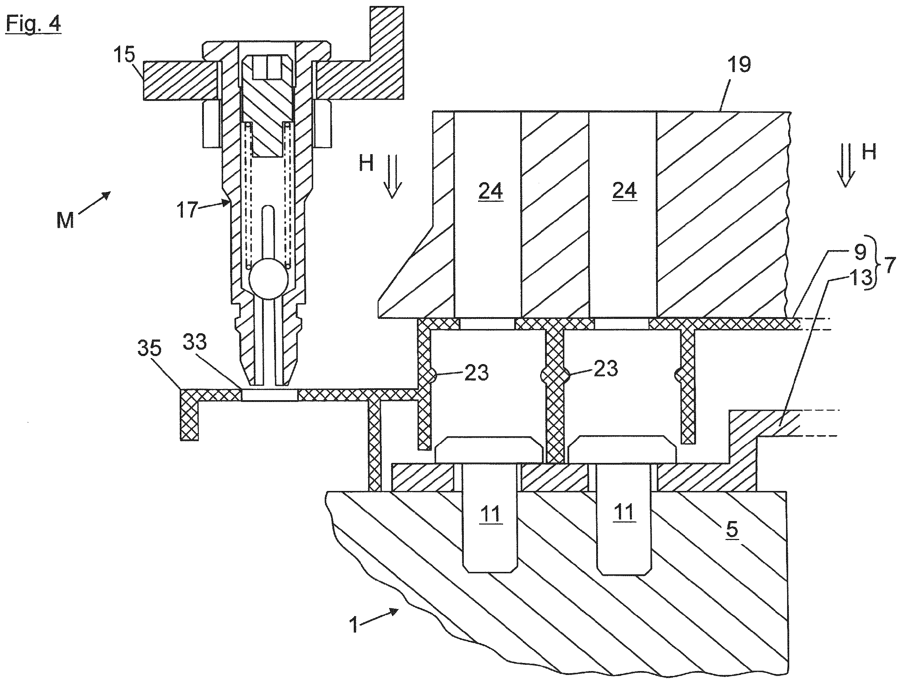

Nachfolgend wird anhand der Fig. 2 bis 4 eine automatisierte Prozessabfolge zur Montage des Modulverbinders 5 auf den Modulterminals 5, 6 der beiden Batteriemodule 1, 3 beschrieben. Die Prozessabfolge wird robotergestützt zum Beispiel mit Hilfe eines nicht gezeigten Mehrgelenk-Roboterarms durchgeführt. An dessen distalem Roboterarm-Ende befindet sich eine als Stahlrahmen ausgeführte Schablone 15, von der in den Figuren 2 bis 5 lediglich ein kleiner Abschnitt angedeutet ist. Die Schablone 15 befindet sich in der Fig. 2 in einer Bestückungsposition B, in der ein Werker die Schablone 15 mit den Modulverbindern 7 (nur einer ist gezeigt) in angedeuteter Pfeilrichtung bestückt. Beim Bestückungsvorgang wird der Modulverbinder 7 in lösbaren Rast- und Klemmeingriff mit insgesamt zwei Spreizstiften 17 der Schablone 15 gebracht. Von den beiden Spreizstiften 17 ist in der Fig. 2 sowie in den Fig. 3 und 4 jeweils nur einer gezeigt, während sich der andere Spreizstift 17 außerhalb der Zeichenebene befindet.

Nach erfolgter Bestückung wird die Schablone 15 robotergestützt in eine Montageposition M (Fig. 3 und 4) transferiert. In der Montageposition M ist die Schablone 15 mit dem daran gehalterten Modulverbinder 7 oberhalb der Batteriemodule 1, 3 angeordnet. Die Schablone 15 überdeckt dabei die Modul-Oberseite sämtlicher Batteriemodule des Hochvoltbatteriesystems.

In der Montageposition M kann der Modulverbinder 7 mit Hilfe eines an der Schablone 15 hubverstellbar geführten Stößels 19 relativ zum Spreizstift 17 um einen Hubweg H (Fig. 4) nach unten verlagert werden. Dadurch gerät der Modulverbinder 7 außer Rast- und Klemmeingriff mit dem Spreizstift 17 und wird dieser auf den Schraubstellen 16 (Fig. 3) der beiden Modulterminals 5, lagerichtig abgelegt.

Wie aus den Fig. 2 und 3 weiter hervorgeht, wird der Modulverbinder 7 bereits mit den Befestigungsschrauben 11 vorgehalten. Diese sind in der Fig. 2 und 3 im Kunststoffgehäuse 13 des Modulverbinders 7 so vorpositioniert, dass deren Schraubköpfe 21 mit ihren Kopf-Unterseiten in Anlage sind mit Kunststoff-Ringschultern 23 des Kunststoffgehäuses 13, die als Bewegungsanschlag wirken.

Nach erfolgter Ablage des Modulverbinders 7 auf den Modulterminals 5, 6 wird ein Schraubprozess durchgeführt- Zum Start des Schraubprozesses wird ein nicht gezeigtes Schraubwerkzeug durch einen Werkzeugzugang 24 im Stößel 19 geführt und in Werkzeugeingriff mit dem Schraubkopf 21 der jeweiligen Befestigungsschraube 11 gebracht wird. Dadurch werden die Kunststoff-Ringschultern 23 im Kunststoffgehäuse 13 des Modulverbinders 7 überdrückt, so dass die Befestigungsschraube 11 in Gewindeeingriff mit dem jeweiligen Modulterminal 5, 6 bringbar sind.

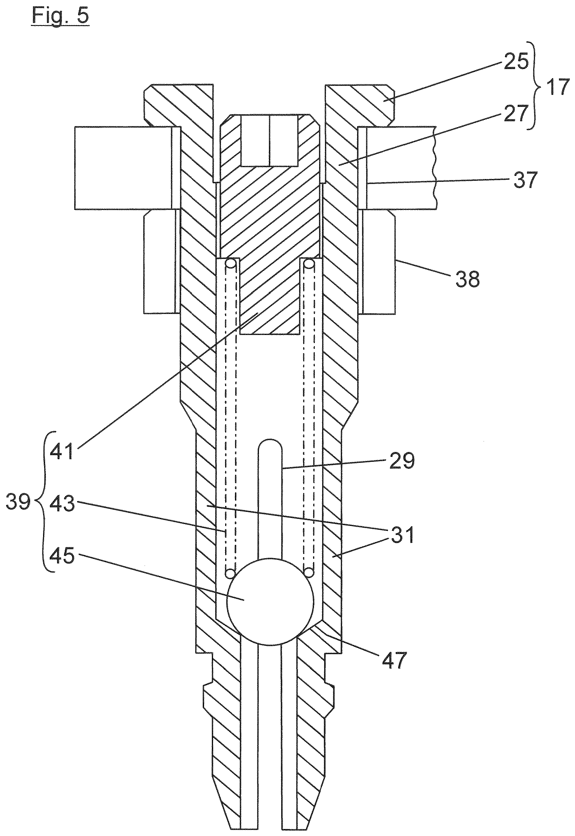

Der Kern der Erfindung liegt in der Bauteilgeometrie des Spreizstiftes 17, die nachfolgend anhand der Fig. 5 erläutert wird: Demnach ist der Spreizstift 17 als ein zylindrischer Hohlstift realisiert, der einen ausgeweiteten Schraubstiftkopf 25 sowie einen daran anschließenden Stiftschaft 27 aufweist. Im Stiftschaft 27 sind in der Umfangsrichtung verteilte Längsschlitze 29 ausgebildet, die an der Schaftspitze axial offen sind. Die Längsschlitze 29 begrenzen in Umfangsrichtung Schaftsegmente 31. An deren Außenseiten sind jeweils Rast- und Klemmkonturen ausgebildet, die in Rast- und Klemmeingriff mit einem Öffnungsrand 33 einer Spreizstift-Aufnahme 35 bringbar ist, die am Kunststoffgehäuse 13 des Modulverbinders 7 materialeinheitlich und einstückig angeformt ist.

Der Spreizstift 27 weist in Axialrichtung zwischen dem Spreizstiftkopf 25 und den Längsschlitzen 29 am Außenumfang des Stiftschaftes 27 ein Außengewinde auf, das in Gewindeeingriff mit einer Kontermutter 38 ist. Gemäß der Fig. 5 ist der Spreizstift 17 durch ein Stiftloch 37 der Schablone 15 geführt, wobei der Öffnungsrandbereich des Stiftloches 37 zwischen dem Spreizstiftkopf 25 und der Kontermutter 38 verspannt ist.

Bei an der Schablone 15 bestücktem Modulverbinder 7 (Fig. 3) drücken die Schaftsegmente 31 mit einer radial nach außen wirkenden Rast- und Klemmkraft F gegen den Öffnungsrand 33 der Spreizstiftaufnahme 35. Zur Einstellung der Rast- und Klemmkraft F ist im Innenraum des hülsenförmigen Spreizstiftes 17 eine Einstelleinheit 39 bereitgestellt. Die Einstelleinheit 39 ist in der Fig. 5 aus einer Einstellschraube 41, einer Feder 43 und einer Spreizkugel 45 aufgebaut. Die Spreizkugel 45 sitzt in der Fig. 5 auf einer innenliegenden Ringschulter 47, die im Bereich der Schaftsegmente 31 ausgebildet ist. Die Einstellschraube 41 ist in etwa auf Höhe des Spreizstiftkopfes 25 in Gewindeeingriff mit einem Innengewinde. Zudem ist die Feder 43 zwischen einer Ringschulter der Einstellschraube 41 und der Spreizkugel 45 abgestützt. Durch Schraubbetätigung der Einstellschraube 41 wird über die Feder 43 eine Steuerkraft auf die Spreizkugel 45 ausgeübt, mittels der die axial ausgerichtete Steuerkraft in eine radial ausgerichtete Spreizbewegung der Schaftsegmente 31 umgewandelt wird. Dadurch kann in einfacher Weise die von dem Spreizstift 17 auf den Öffnungsrand 33 der Spreizstiftaufnahme 35 wirkende Rast- und Klemmkraft F im Laufe der Betriebsdauer des Spreizstiftes nachjustiert oder nachgestellt werden.

### BEZUGSZEICHENLISTE:

- 1, 3: Batteriemodule
- 5, 6: Modulterminals
- 7: Modulverbinder
- 9: stromführende Metallschiene
- 11: Befestigungsschrauben
- 13: Kunststoffgehäuse
- 15: Schablone
- 16: Schraubstellen der Modulterminals
- 17: Spreizstift
- 19: Stößel
- 21: Schraubkopf
- 23: Kunststoffgehäuse-Ringschulter
- 24: Werkzeugzugang
- 25: Spreizstiftkopf
- 27: Stiftschaft
- 29: Längsschlitze
- 31: Schaftsegmente
- 33: Öffnungsrand
- 35: Spreizstiftaufnahme
- 37: Stiftloch
- 38: Kontermutter
- 39: Einstelleinheit
- 41: Einstellschraube
- 43: Feder
- 45: Spreizkugel
- 47: Ringschulter
- F: Rast- und/oder Klemmkraft
- B: Bestückungsposition
- M: Montageposition
- H: Hubweg

## Patentansprüche

1. Tragelement für den Transfer eines Bauteils (7) von einer Bestückungsposition (B), in der das Tragelement (15) mit dem Bauteil (7) bestückbar ist, zu einer Montageposition (M), in der das Bauteil (7) vom Tragelement (15) lösbar und an einer Fügestelle montierbar ist,
**dadurch gekennzeichnet,**
**dass** das Tragelement (15) zumindest einen Spreizstift (17) aufweist, der nach erfolgter Bestückung in lösbarem Rast- oder Klemmeingriff mit einer Bauteil-Gegenkontur (33) ist, und zwar unter Aufbau einer radial nach außen wirkenden Rast- oder Klemmkraft (F), wobei der Spreizstift (17) in der Montageposition (M) außer Rast- oder Klemmeingriff mit der Bauteil-Gegenkontur (33) bringbar ist, und
**dass** dem Spreizstift (17) eine Einstelleinheit (39) zugeordnet ist, mittels der die radial nach außen wirkende Rast- oder Klemmkraft (F) einstellbar ist.

2. Tragelement nach Anspruch 1, **dadurch gekennzeichnet, dass** der Spreizstift (17) einen Stiftschaft (27) mit zumindest einem radial verstellbaren Schaftsegment (31) aufweist, und dass das Schaftsegment (31) mittels der Einstelleinheit (39) in Radialrichtung ein- oder aussteuerbar ist, um die Rast- oder Klemmkraft (F) einzustellen.

3. Tragelement nach Anspruch 2, **dadurch gekennzeichnet, dass** der Spreizstift (17) als ein Hohlstift ausgebildet ist, in dem insbesondere in Umfangsrichtung verteilte Längsschlitze (29) ausgebildet sind, die bevorzugt an der Schaftspitze axial offen sind, und dass insbesondere die Längsschlitze (29) in Umfangsrichtung Schaftsegmente (31) begrenzen, und/oder dass insbesondere die Einstelleinheit (39) im Innenraum des als Hohlstift ausgebildeten Spreizstifts (17) angeordnet ist.

4. Tragelement nach einem der vorhergehenden Ansprüche, **dadurch gekennzeichnet, dass** die Einstelleinheit (39) eine Einstellschraube (41) aufweist, bei deren Schraubbetätigung die radial nach außen wirkende Rast- oder Klemmkraft (F) des Spreizstifts (17) einstellbar ist, und/oder dass die Einstellschraube (41) mittelbar oder unmittelbar auf das Schaftsegment (31) einwirkt.

5. Tragelement nach Anspruch 4, **dadurch gekennzeichnet, dass** die Einstelleinheit (39) ein Spreizelement (45), insbesondere eine Spreizkugel, aufweist, das kraftübertragend zwischen der Einstellschraube (41) und dem Schaftsegment (31) angeordnet ist, und dass insbesondere das Spreizelement (31) eine in Axialrichtung ausgerichtete Schraubbewegung in eine radial ausgerichtete Spreizbewegung des Spreizsegments (31) umwandelt.

6. Tragelement nach Anspruch 5, **dadurch gekennzeichnet, dass** der Stiftschaft (27) des Spreizstifts (17), insbesondere im Bereich des Schaftsegments (31), eine innenliegende Ringschulter (47) aufweist, auf der das Spreizelement (17) abstützbar ist.

7. Tragelement nach Anspruch 5 oder 6, **dadurch gekennzeichnet, dass** die Einstelleinheit (39) eine Feder (43) aufweist, und dass die Einstellschraube (41) mittelbar, das heißt unter Zwischenlage der Feder (43), auf das Spreizelement (45) wirkt.

8. Tragelement nach einem der vorhergehenden Ansprüche, **dadurch gekennzeichnet, dass** das Tragelement (15) eine Schablone ist, die als ein Hilfswerkzeug für einen automatisierten Zusammenbau eines Hochvoltbatteriesystems eines elektrisch betriebenen Fahrzeugs wirkt, und dass das Bauteil (7) ein Modulverbinder ist, der Modulterminals (5, 6) benachbarter Batteriemodule (1, 3) des Hochvoltbatteriesystems miteinander elektrisch verschaltet.

9. Tragelement nach Anspruch 8, **dadurch gekennzeichnet, dass** in der Bestückungsposition (B) der Modulverbinder (7) in lösbaren Rast- und/oder Klemmeingriff mit dem Spreizstift (17) der Schablone (15) bringbar ist, und in der Montageposition (M) der Modulverbinder (7) mittels eines hubverstellbaren an der Schablone (15) ausgebildeten Stößels (19) außer Rast- oder Klemmeingriff mit dem Spreizstift (17) der Schablone (15) bringbar und lagerichtig auf den Schraubstellen (16) der Modulterminals (5, 6) ablegbar ist, um einen Schraubprozess vorzubereiten, bei dem der Modulverbinder (7) mit den Modulterminals (5, 6) der benachbarten Batteriemodule (1, 3) verspannbar ist.

10. Spreizstift für ein Tragelement (19) nach einem der vorhergehenden Ansprüche, der nach erfolgter Bestückung des Tragelements (19) in lösbarem Rast- oder Klemmeingriff mit einer Bauteil-Gegenkontur (33) ist, und zwar unter Aufbau einer radial nach außen wirkenden Rast- oder Klemmkraft (F), wobei der Spreizstift (17) in der Montageposition (M) außer Rast- oder Klemmeingriff mit der Bauteil-Gegenkontur (33) bringbar ist, wobei dem Spreizstift (17) eine Einstelleinheit (39) zugeordnet ist mittels der die radial nach außen wirkende Rast- oder Klemmkraft (F) einstellbar ist.

## Claims

1. Supporting element for the transfer of a component (7) from an assembly position (B), in which the supporting element (15) can be fitted with the component (7), to a mounting position (M), in which the component (7) can be detached from the supporting element (15) and mounted at a joint,
**characterized in that**
the supporting element (15) has at least one expansion pin (17), which, following successful assembly, is in a detachable latching or clamping engagement with a component mating contour (33) brought about by applying a radially outwardly acting latching or clamping force (F), wherein the expansion pin (17) can be brought into the mounting position (M) without a latching or clamping force with the component mating contour (33), and
**in that** the expansion pin (17) is assigned to an adjustment unit (39), by means of which the radially outwardly acting latching or clamping force (F) can be adjusted.

2. Supporting element according to claim 1, **characterized in that** the expansion pin (17) has a pin shaft (27) with at least one radially adjustable shaft segment (31), and **in that** the shaft segment (31) can be activated or released in a radial direction by means of the adjustment unit (39), in order to adjust the latching or clamping force (F).

3. Supporting element according to claim 2, **characterized in that** the expansion pin (17) is designed as a hollow pin, in which, in particular, longitudinal slots (29) distributed in the circumferential direction are formed, which are preferably axially open at the shaft tip, and **in that**, in particular, the longitudinal slots (29) delimit shaft segments (31) in a circumferential direction, and/or **in that**, in particular, the adjustment unit (39) is arranged in the interior of the expansion pin (17) designed as a hollow pin.

4. Supporting element according to any one of the preceding claims, **characterized in that** the adjustment unit (39) has an adjusting screw (41), which, when screwed in or out, adjusts the radially outwardly acting latching or clamping force (F) of the expansion pin (17), and/or **in that** the adjusting screw (41) acts directly or indirectly on the shaft segment (31).

5. Supporting element according to claim 4, **characterized in that** the adjustment unit (39) has an expansion element (45), in particular an expansion sleeve, which is arranged in a force-transmitting manner between the adjusting screw (41) and the shaft segment (31), and **in that**, in particular, the expansion element (31) converts a screwing motion oriented in an axial direction into a radially oriented expansion motion of the expansion segment (31).

6. Supporting element according to claim 5, **characterized in that** the pin shaft (27) of the expansion pin (17), in particular in the region of the shaft segment (31), has an inner annular shoulder (47), on which the expansion element (17) can be supported.

7. Supporting element according to claim 5 or 6, **characterized in that** the adjustment unit (39) has a spring (43), and **in that** the adjusting screw (41) acts indirectly, i.e. with the interposition of the spring (43), on the expansion element (45).

8. Supporting element according to any one of the preceding claims, **characterized in that** the supporting element (15) is a template, which acts as an auxiliary tool for an automated assembly of a high-voltage battery system of an electrically operated vehicle, and **in that** the component (7) is a module connector, which electrically connects the module terminals (5, 6) of adjacent battery modules (1, 3) of the high-voltage battery system to one another.

9. Supporting element according to claim 8, **characterized in that,** in the assembly position (B), the module connector (7) can be brought into detachable latching and/or clamping engagement with the expansion pin (17) of the template (15), and in the mounting position (M), the module connector (7) can be brought out of latching or clamping engagement with the expansion pin (17) of the template (15) by means of a stroke-adjustable plunger (19) formed on the template (15) and placed in the correct position on the screw holes (16) of the module terminals (5, 6), in order to prepare for a screwing process, in which the module connector (7) can be tightly interlocked with the module terminals (5, 6) of the adjacent battery module (1, 3).

10. Expansion pin for a supporting element (19) according to any one of the preceding claims, which, following successful assembly of the supporting element (19), is in a detachable latching or clamping engagement with a component mating contour (33), brought about by applying a radially outwardly acting latching or clamping force (F), wherein the expansion pin (17) can be brought into the mounting position (M) without a latching or clamping force with the component mating contour (33), wherein the expansion pin (17) is assigned to an adjustment unit (39) by means of which the radially outwardly acting latching or clamping force (F) can be adjusted.

## Revendications

1. Élément support pour le transfert d'un composant (7) d'une position d'équipement (B), dans laquelle l'élément support (15) peut être équipé du composant (7), à une position de montage (M) dans laquelle le composant (7) est détachable de l'élément support (15) et peut être monté en un point d'assemblage,
**caractérisé en ce que**
l'élément support (15) présente au moins une tige d'écartement (17) qui est, une fois l'équipement effectué avec succès, en prise d'encliquetage ou de serrage amovible avec un contour antagoniste de composant (33), et ce en établissant une force d'encliquetage ou de serrage (F) agissant radialement vers l'extérieur, dans lequel la tige d'écartement (17) peut être amenée dans la position de montage (M) hors prise d'encliquetage ou de serrage avec le contour antagoniste de composant (33) et
une unité de réglage (39) est associée à la tige d'écartement (17), unité au moyen de laquelle la force d'encliquetage ou de serrage (F) agissant radialement vers l'extérieur est réglable.

2. Élément support selon la revendication 1, **caractérisé en** ceque la tige d'écartement (17) présente un arbre de tige (27) avec au moins un segment d'arbre (31) réglable radialement, et en ce que le segment d'arbre (31) peut être commandé ou ajusté au moyen de l'unité de réglage (39) dans le sens radial afin de régler la force d'encliquetage ou de serrage (F).

3. Élément support selon la revendication 2, **caractérisé en** ceque la tige d'écartement (17) est formée comme une tige creuse dans laquelle des fentes longitudinales (29) réparties en particulier dans le sens périphérique sont formées, lesquelles sont de préférence ouvertes axialement au niveau de la pointe de l'arbre, et en ce qu'en particulier les fentes longitudinales (29) délimitent dans le sens périphérique des segments d'arbre (31), et/ou en ce qu'en particulier l'unité de réglage (39) est agencée dans l'espace intérieur de la tige d'écartement (17) formée comme tige creuse.

4. Élément support selon l'une quelconque des revendications précédentes, **caractérisé en ce que** l'unité de réglage (39) présente une vis de réglage (41), pour l'actionnement de vissage de laquelle la force d'encliquetage ou de serrage (F) agissant radialement vers l'extérieur de la tige d'écartement (17) est réglable, et/ou **en ce que** la vis de réglage (41) agit directement ou indirectement sur le segment d'arbre (31).

5. Élément support selon la revendication 4, **caractérisé en ce que** l'unité de réglage (39) présente un élément d'écartement (45), en particulier une bille d'écartement qui est agencée de manière à transmettre la force entre la vis de réglage (41) et le segment d'arbre (31) et **en ce qu'**en particulier l'élément d'écartement (31) convertit un mouvement de vissage orienté dans le sens axial en un mouvement d'écartement orienté radialement du segment d'écartement (31).

6. Élément support selon la revendication 5, **caractérisé en ce que** l'arbre de tige (27) de la tige d'écartement (17), en particulier dans la zone du segment d'arbre (31), présente un épaulement annulaire (47) intérieur sur lequel l'élément d'écartement (17) peut être en appui.

7. Élément support selon la revendication 5 ou 6, **caractérisé en** ceque l'unité de réglage (39) présente un ressort (43) et en ce que la vis de réglage (41) agit indirectement, c'est à dire en intercalant le ressort (43), sur l'élément d'écartement (45).

8. Élément support selon l'une quelconque des revendications précédentes, **caractérisé en** ceque l'élément support (15) est un gabarit qui agit comme un outil auxiliaire pour un assemblage automatisé d'un système de batterie haute tension d'un véhicule électrique, et en ce que le composant (7) est un connecteur de module qui connecte électriquement entre eux des terminaux de module (5, 6) de modules de batterie (1, 3) contigus du système de batterie haute tension.

9. Élément support selon la revendication 8, **caractérisé en** ceque dans la position d'équipement (B), le connecteur de module (7) peut être amené en prise d'encliquetage et/ou de serrage amovible avec la tige d'écartement (17) du gabarit (15), et dans la position de montage (M), le connecteur de module (7), peut être amené au moyen d'un coulisseau (19) formé sur le gabarit (15) réglable en hauteur hors prise d'encliquetage ou de serrage avec la tige d'écartement (17) du gabarit (15) et peut être placé en bonne position sur les points de vissage (16) des terminaux de module (5, 6) afin de préparer un processus de vissage pour lequel le connecteur de module (7) peut être serré avec les terminaux de module (5 6) des modules de batterie (1, 3) contigus.

10. Tige d'écartement pour un élément support (19) selon l'une quelconque des revendications précédentes qui est, une fois l'équipement effectué avec succès, en prise d'encliquetage ou de serrage amovible avec un contour antagoniste de composant (33), de l'élément support (19), et ce en établissant une force d'encliquetage ou de serrage (F) agissant radialement vers l'extérieur, dans lequel la tige d'écartement (17) peut être amenée dans la position de montage (M) hors prise d'encliquetage ou de serrage avec le contour antagoniste de composant (33), dans laquelle une unité de réglage (39) est associée à la tige d'écartement (17), unité au moyen de laquelle la force d'encliquetage ou de serrage (F) agissant radialement vers l'extérieur est réglable.
